# DEMANDE DE BREVET EUROPEEN

(11) **EP 4 047 811 A1**
(43) Date de publication de la demande: **24.08.2022**
(21) Numéro de dépôt: 22157951.9
(22) Date de dépôt: 22.02.2022
(51) Int. Cl.: H02P 8/04, H02P 8/14, H02P 8/18, H02P 8/20, H02P 8/22, H02P 8/24, H02P 8/40

(54) **MÉTHODE DE COMMANDE D'UN MOTEUR PAS À PAS À L'AIDE D'UN CIRCUIT LOGIQUE PROGRAMMABLE**

(30) Priorité: 23.02.2021 BE 202105122
(71) Demandeur: Gaw-R Company Sprl, 1450 Chastre (BE)
(72) Inventeur: MONNOM, Olivier, 1450 Chastre (BE)
(74) Mandataire: Office Kirkpatrick

(57) **Abrégé**

L'invention s'inscrit dans la commande de moteur de positionnement « pas à pas » à l'aide d'un circuit FPGA et d'un processeur. Plus particulièrement, l'invention concerne une méthode de contrôle d'au moins un moteur pas à pas de commande d'un mouvement à l'aide d'un processeur et d'un circuit logique programmable (FPGA) fonctionnant à une fréquence donnée déterminant un cycle d'horloge, comprenant plusieurs étapes. L'invention concerne également tout dispositif permettant de mettre en œuvre la méthode.

## Description

### Domaine de l'invention

L'invention s'inscrit dans le domaine de la commande et du contrôle des moteurs électriques à impulsion à l'aide de circuit logique programmable. Plus particulièrement, l'invention s'inscrit dans la commande de moteur de positionnement « pas à pas » à l'aide d'un circuit FPGA et d'un processeur.

### Contexte

Les utilisations des moteurs à impulsion sont nombreuses dans l'industrie : fabrication électronique, imprimante 3D, robotique, machine-outil, etc. Ce type de moteur est principalement utilisé pour déplacer un objet ou un outil dans l'espace. Dans ce cas, les moteurs doivent être commandés, i.e. qu'il est nécessaire de leur fournir les instructions pour qu'ils impartissent le mouvement désiré à l'objet ou l'outil, ce mouvement étant sous-tendu par des équations mathématiques aussi appelées équations cinématiques. La commande de ces moteurs est principalement réalisée en résolvant les équations de base de la cinématique dans une ou plusieurs dimensions. Ces équations peuvent être résolues aisément à l'aide d'unités de calcul de type processeur, que ce soit via l'utilisation d'un ordinateur ou via l'utilisation d'un système embarqué à microcontrôleur. Afin de satisfaire les contraintes de temps (la résolution temporelle est de l'ordre de la microseconde) inhérentes à la commande de ces moteurs, les processeurs utilisés doivent être très rapides et sont donc coûteux. L'utilisation de processeur bon marché est envisageable mais au dépend de la résolution temporelle. Pour réduire les coûts liés à la commande de ces moteurs, il est envisageable d'utiliser des circuits logiques programmables (FPGA). Cependant, cette solution n'est pas réellement profitable car bien que techniquement possible, résoudre les équations cinématiques à l'aide d'un FPGA de manière classique (i.e. avec des multiplications et/ou divisions arithmétiques) conduit à des temps de calculs beaucoup trop longs à chaque itération. En effet, un FPGA n'étant a priori pas destiné à ce genre de calculs, il est nécessaire d'augmenter la période du cycle d'horloge du FPGA ou d'étaler les calculs sur plusieurs cycles d'horloge afin que cela soit possible. Cela a pour conséquence de dégrader la résolution temporelle de la méthode. Ceci engendre principalement deux effets néfastes : la limitation d'utilisation des moteurs dans des plages de basses vitesses et la présence de vibrations et/ou à-coups qui peuvent nuire à la qualité du mouvement et à la pérennité du dispositif car le mouvement devient saccadé.

C'est pourquoi la demanderesse a jugé utile de développer une nouvelle méthode de commande de moteur pas à pas à l'aide d'un FPGA qui utilise la logique combinatoire de base disponible dans les circuits logiques programmables afin d'augmenter la résolution temporelle de la méthode de commande et d'ainsi diminuer les effets non-désirables associés.

L'invention concerne également tout dispositif utilisé pour mettre en œuvre la méthode de l'invention.

### Solution de l'invention

L'invention concerne une méthode de contrôle d'au moins un moteur pas à pas de commande d'un mouvement à l'aide d'un processeur et d'un circuit logique programmable (FPGA) fonctionnant à une fréquence donnée déterminant un cycle d'horloge, comprenant les étapes suivantes :
A. On calcule avec le processeur les données cinématiques du mouvement à effectuer sur base des paramètres prédéfinis et des données initiales du mouvement à effectuer ;
B. On transmet au FPGA les données cinématiques et les données initiales du mouvement à effectuer;
C. Le FPGA résout les équations de la cinématique à l'aide des données cinématiques à chaque cycle d'horloge et commande, pour chaque cycle d'horloge, l'envoi éventuel d'une impulsion au moteur;
D. Le cas échéant, le moteur s'actionne pour commander la fraction dudit mouvement correspondant à cette impulsion, et
E. On réitère les étapes C et D jusqu'à la fin du mouvement.

Les données de la cinématique comprennent un profil d'hyper-accélération, i.e. les valeurs d'hyper-accélération du mouvement en fonction du temps.

Le FPGA résout les équations de la cinématique en déduisant du profil d'hyper-accélération l'accélération, la vitesse et/ou les positions successives du mouvement à effectuer. Les équations de la cinématique sont bien connues de l'homme du métier.

La résolution des équations de la cinématique par le FPGA n'implique de préférence que deux uniques opérations qui sont le décalage binaire droite et gauche et des additions binaires.

Dans la présente application, les expressions « moteur pas à pas » ou « moteur à impulsion » sont considérées comme équivalentes. Un moteur pas à pas est un moteur qui permet de transformer une impulsion électrique en un mouvement angulaire élémentaire (dθ). La valeur de l'incrément (le pas) dθ est constante et est définie par les caractéristiques intrinsèques du moteur. Concrètement, l'impulsion électrique responsable de l'actionnement de ce type de moteurs doit lui être envoyée et commandée par un élément extérieur (e.g. une unité de contrôle). Ces moteurs sont connus de l'art antérieur et ont typiquement une vitesse maximale de 1000 tr/min à 8000tr/min pour les moteurs à 200 pas par tour.

Le mouvement angulaire peut être directement utilisé pour commander un mouvement de rotation, la rotation d'un bras préhenseur par exemple. Un incrément dθ du moteur correspond donc à un mouvement angulaire final de dθ degrés.

Cependant, le mouvement angulaire de l'arbre du moteur peut être linéarisé au moyen d'un mécanisme d'entraînement, e.g. une vis, une courroie crantée, une crémaillère ou tout autre moyen connu de l'homme du métier. Dans ce cas, un pas du moteur correspond à un incrément linéaire (dX) lui-même fonction de dθ. La valeur de l'incrément dX est également constante et est définie par les caractéristiques intrinsèques du mécanisme d'entraînement. Un incrément dθ du moteur correspond donc à un mouvement final linéaire de dX mètres. La linéarisation du mouvement permet en général le déplacement et le positionnement précis d'objets ou d'outils mécaniques dans l'espace. Par exemple, un moteur pas à pas couplé à une crémaillère peut commander le déplacement de la tête d'impression d'une imprimante.

Les notations dθ ou dX peuvent donc être considérées comme équivalentes en termes de signification physique (i.e. un incrément du moteur) bien que, pour ne pas surcharger le document, la notation dX sera en général préféré.

Plusieurs moteurs peuvent être commandés simultanément et de manière synchronisée à l'aide de la méthode de l'invention sur base d'un seul FPGA, notamment pour un mouvement en trois dimensions. C'est un des intérêts particuliers de l'invention de pouvoir commander des impulsions à plusieurs moteurs à chaque cycle d'horloge d'un unique FPGA. Par exemple, trois moteurs peuvent être combinés pour gérer chacun une direction de mouvement dans un référentiel cartésien XYZ, le mouvement résultant pouvant être une ligne droite ou une courbe dans l'espace cartésien.

Un mouvement doit être ici entendu comme le déplacement d'un objet dans au moins une direction d'un espace, par exemple un espace cartésien. Le mouvement se définit par une position initiale Xo et une position finale X_{f} dans ce repère. Ce sont les données initiales de la méthode. Ces positions définissent la longueur L du mouvement, par exemple, L = ∥Xf-X0∥ dans le cas d'une ligne droite. La longueur L est comprise dans les données cinématiques du mouvement.

Le mouvement pouvant être réalisé dans plus d'une dimension de l'espace, Xo et X_{f} peuvent être généralisés à des vecteurs à plusieurs dimensions. Il en va de même pour toutes les grandeurs physiques impliquées dans ce document (dX, dθ, etc.).

Afin de respecter les contraintes mécaniques du moteur et du système, le mouvement est également caractérisé par une vitesse maximale Vₘₐₓ, une accélération maximale Aₘₐₓ et un critère d'hyper-accélération maximale Jₘₐₓ (appelé *jerk* en anglais). Ces valeurs (Vmax, Aₘₐₓ et Jₘₐₓ) constituent les paramètres prédéfinis du mouvement.

Alternativement, l'espace peut être représenté par un système de coordonnées cylindriques et les valeurs sont alors exprimés dans ce repère spécifique.

La durée totale T du mouvement n'est calculable uniquement que si le problème est bien posé. La contrainte choisie est généralement celle du déplacement critique, i.e. le déplacement qui conduit à un temps de déplacement minimum compte tenu des paramètres prédéfinis du mouvement. Le mouvement réel du moteur ainsi que le mouvement de l'objet dans le cas d'une transmission indirecte peut être sous-tendu par une consigne théorique. Il existe une consigne pour la position, la vitesse, l'accélération et le jerk, celles-ci étant mathématiquement liées entre elles.

La consigne de position peut suivre une courbe en S (*S-curve* en anglais). Il en découle que la consigne du jerk est une séquence discontinue de k segments constants définie par des couples de valeur (Jₖ, tₖ).

Les couples (Jₖ, tₖ)(le profil d'hyper-accélération/Jerk) ainsi que la longueur L correspondent aux données cinématiques du mouvement à effectuer.

De préférence, la consigne du jerk est une courbe symétrique à sept segments (k=7), bien que le nombre de segments peut éventuellement être réduit si la longueur du mouvement se réduit.

Les vitesses initiale et finale du mouvement sont de préférence nulles mais des vitesses initiale et finale non-nulles peuvent également être gérées par la méthode de l'invention. Dans ce cas, les données initiales intègrent également ces données de vitesse.

Bien que les consignes soient des fonctions réelles continues, le mouvement réel associé est quant à lui une fonction discrète. En d'autres mots, un mouvement de longueur L correspond à une séquence discontinue de déplacements élémentaires dX, chaque déplacement dX étant effectué sur une durée donnée.

Un processeur ou microprocesseur est un circuit intégré capable d'exécuter une série d'instructions informatiques, notamment de l'arithmétique simple tel que des opérations d'addition, de multiplication et/ou de division.

Un circuit logique programmable ou FPGA (pour *Field-programmable gate array* en anglais) est un circuit intégré logique capable d'exécuter des équations de logique combinatoire. Contrairement au microprocesseur, il ne peut pas exécuter un programme informatique.

Le FPGA est composé d'au moins une unité de calcul. De préférence, le FPGA est composé de huit unités de calcul. Chaque unité de calcul comprend une horloge, un *latch*, une unité de logique combinatoire, un générateur d'impulsion et une unité de synchronisation.

L'horloge du FPGA fonctionne à une fréquence donnée fo, variant généralement de 50MHz à 200 Mhz. L'inverse de la fréquence détermine la période d'un cycle d'horloge du FGPA. Il s'agit du temps (dt) disponible pour réaliser une itération. En d'autres mots, dt correspond à la résolution temporelle de la méthode.

Le latch ou bascule est un circuit logique capable de maintenir les valeurs de ses sorties malgré un changement de valeurs à son entrée. L'unité de logique combinatoire est l'élément du FGPA responsable de la résolution des différentes équations logiques nécessaires à la résolution des équations de la cinématique du mouvement à effectuer. Les équations de la cinématique du mouvement correspondent aux équations standards de la physique d'un mouvement, uniformément ou linéairement accéléré, dans au moins une dimension d'un espace normé.

Le générateur d'impulsions consiste quant à lui en une unité de seuillage qui s'active lorsque la valeur de position dépasse un multiple de déplacement élémentaire dX. Cette activation déclenche une impulsion dont la grandeur est pré-paramétrée et constante.

L'unité de synchronisation permet l'implémentation du « motion blending ». Ce concept est détaillé plus loin.

De manière générale, le nombre de moteurs commandables n'est limité que par la capacité du FPGA utilisé.

La méthode de l'invention est une méthode itérative, i.e. que les valeurs de position (Xi) (et dans une moindre mesure les vitesses et les accélérations) sont calculées successivement à partir d'une position initiale Xo. Dans ce document, Xi correspond donc à la position calculée lors d'une itération, la durée d'une itération étant définie par la résolution temporelle dt de la méthode.

Comme mentionné ci-dessus, dθ correspond à un incrément angulaire du moteur, dX correspond à un incrément linéaire dans le cas d'une transmission par le biais d'un mécanisme intermédiaire et est une fonction de dθ, dt correspond à la résolution temporelle de la méthode (la durée d'une itération), X₀ et X_{f} sont les données initiales, les k couples (Jₖ, tₖ) et la longueur L sont les données cinématiques et Vₘₐₓ, Aₘₐₓ et Jₘₐₓ sont les paramètres prédéfinis de la méthode.

Pour contrôler le moteur correctement afin de réaliser un mouvement, on calcule premièrement les données cinématiques du mouvement à effectuer avec le processeur sur base des paramètres prédéfinis et des données initiales. En sortie du processeur, toutes les valeurs (Jₖ, tₖ) et la longueur L sont donc déterminées. Ce calcul n'est réalisé qu'une seule fois par mouvement et en amont du processus itératif.

On transmet ensuite au FPGA les données cinématiques et les données initiales du mouvement à effectuer.

Le circuit logique programmable résout alors les équations de la cinématique à chaque cycle d'horloge et commande, pour chaque cycle d'horloge, l'envoi éventuel d'une impulsion au moteur correspondant. Plus particulièrement, c'est l'unité de logique combinatoire qui résout les différentes équations logiques nécessaires à la résolution des équations de la cinématique du mouvement à effectuer.

La spécificité de la méthode de l'invention réside dans le fait que la résolution de ces équations ne demande aucune opération de multiplication ou de division arithmétique, contrairement à ce qui est réalisé lorsque que l'unité de commande est basée principalement sur l'utilisation d'un processeur ou basée sur de l'arithmétique de nombre entier sur FPGA. En effet, l'unité de logique combinatoire du FPGA va résoudre ces équations à l'aide de portes logiques élémentaires uniquement. Il en découle que les temps de calculs sont courts et que la résolution temporelle dt de la méthode est haute. Plus particulièrement, l'incrément dt n'est jamais supérieur à la durée d'un cycle d'horloge du FPGA. De facto, pour un FPGA donné, la résolution temporelle est optimisée et est égale à l'inverse de la fréquence de fonctionnement du FPGA.

Une haute résolution temporelle permet de lisser la courbe de déplacement réel discontinue. Ceci minimise les contraintes mécaniques infligées au moteur par un fonctionnement plus *fluide* tout au long du mouvement. De plus, la résolution temporelle étant plus haute, dt est petit. Cela permet de faire fonctionner le moteur à des vitesses plus élevées et donc de réduire le temps total d'un mouvement donné. La synergie entre ces deux avantages constitue le cœur de la présente invention.

Le FPGA va ensuite commander l'envoi éventuelle d'une impulsion suivant une condition logique de type booléenne.

Lorsque la condition logique est respectée, une impulsion électrique est générée et le moteur s'actionne pour commander la fraction du mouvement correspondant à cette impulsion.

Si la condition logique n'est pas respectée, aucune impulsion n'est envoyée et le processus itératif se poursuit. Chaque itération ne déclenche donc pas automatiquement un actionnement du moteur.

Le processus itératif se poursuit alors jusqu'à la fin du mouvement.

En outre, l'invention permet l'implémentation efficace du « motion blending », c'est-à-dire l'actionnement de plusieurs moteurs séquentiellement pour un mouvement complexe en plusieurs dimensions. Le motion blending peut être implémenté dans le cas d'un mouvement dans au moins deux dimensions de l'espace. Dans ce cas, le déplacement dans chaque dimension est associé à un axe de déplacement. Le motion blending consiste alors à activer le mouvement le long d'un ou plusieurs axes alors qu'un mouvement le long d'au moins un autre axe est en cours et lorsqu'une position prédéfinie le long de cet autre axe est atteinte.

Le motion blending s'oppose au mouvement séquentiel brut et permet de ne pas attendre la fin d'un mouvement le long d'un axe pour en entamer un autre sur au moins un axe différent. Il en découle un gain de temps significatif sur l'ensemble du mouvement, et une fluidité de mouvement.

L'invention sera mieux comprise à l'aide de la description suivante d'une mise en œuvre de l'invention, en référence aux dessins, sur lesquels :
- la figure 1 expose les consignes théoriques de jerk d'un mouvement à effectuer ainsi que les valeurs d'accélération, vitesse et position qui en découlent ;
- la figure 2 est une vue schématisée d'un dispositif de l'invention ;
- la figure 3 est une illustration du fonctionnement d'un générateur d'impulsion ;
- la figure 4 est une vue schématisée d'un dispositif de l'invention contrôlant deux moteurs, et
- la figure 5 est un schéma de la méthode de l'invention.

La mise en œuvre de l'invention exemplifiée ci-dessous correspond ici à une méthode de commande d'un préhenseur mécanique selon un mouvement unidirectionnel (l'axe X) à l'aide d'un moteur pas à pas et d'une crémaillère au cours du temps. Ce mouvement peut être destiné à déplacer un composant électronique d'un point A à un point B. Le préhenseur saisit l'objet en A, le mouvement est commandé et une fois terminé, le préhenseur dépose l'objet à l'endroit B. Dans le cas présent, un incrément linéaire de déplacement dX correspond au déplacement du préhenseur mécanique le long de la crémaillère lors d'une impulsion électrique envoyée au moteur pas à pas. Le mouvement du préhenseur est donc une succession discontinue de petits déplacements dX.

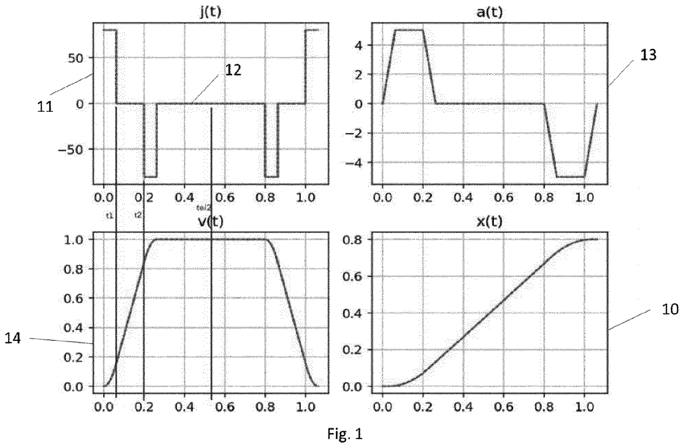

En référence à la figure 1, la consigne théorique de position 10 (X(t)) du mouvement à effectuer est une courbe en S. Ce type de courbe respecte un ensemble de caractéristiques spécifiques, par exemple des contraintes sur la dérivabilité des points extrêmes ou encore une contrainte de symétrie. Elle permet principalement de réaliser des mouvements qui évoluent progressivement et de manière quasi-continue. Ceci a l'avantage de minimiser les efforts infligés au moteur, à la crémaillère et au dispositif complet en général.

Mathématiquement, il en découle que la consigne du jerk 11 (J(t)) est une séquence discontinue de segments constants, chaque segment pouvant avoir une valeur différente mais toujours inférieure en valeur absolue au critère d'hyper-accélération Jₘₐₓ. Cette consigne est définie par sept couples (Jₖ, tₖ), Jₖ correspondant à la valeur du jerk pour le k^{ème} segment, celui-ci étant défini sur un période de tₖ secondes. Par exemple, le segment 12 implique un jerk nul sur une période de 0,54 sec : cela correspond à une accélération constante (et nulle dans ce cas-ci).

La courbe d'accélération 13 nous indique que le mouvement à effectuer est dans ce cas-ci un mouvement mixte uniformément et linéairement accéléré. Le préhenseur commence donc sa course avec une vitesse nulle, accélère ensuite avant d'atteindre un plateau. Il avancera ensuite à vitesse constante durant à peu près la moitié du mouvement avant de décélérer et de terminer sa course à une vitesse nulle, comme nous l'indique la courbe de vitesse 14 (V(t)).

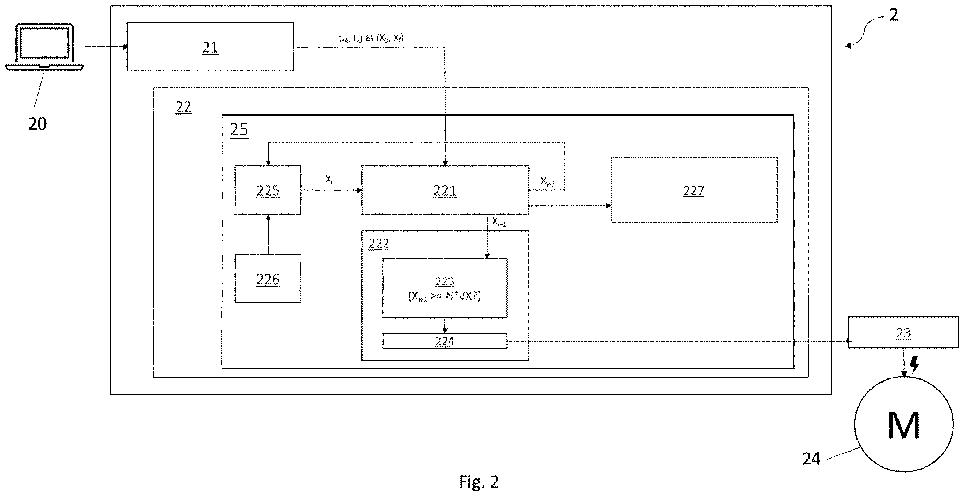

En référence à la figure 2, l'unité de contrôle 2 est responsable de la commande du mouvement d'un moteur pas à pas 24 par le biais d'un driver 23. L'unité 2 se compose d'un processeur 21, d'un circuit logique programmable FPGA 22.

L'opérateur interagit avec l'unité de contrôle 2 au moyen d'un ordinateur 20. En effet, avant tout calcul, l'ordinateur 20 envoie à l'unité de contrôle 2, plus particulièrement au processeur 21, les paramètres prédéfinis du mouvement ainsi que les positions initiales et finales du mouvement.

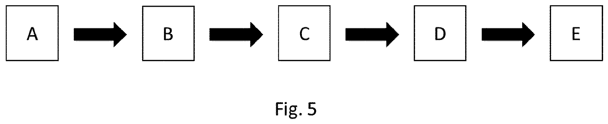

Afin d'imputer correctement les impulsions électriques nécessaires au fonctionnement du moteur 24, on calcule (cf. figure 5, étape A) premièrement à l'aide du processeur 21 les données cinématiques du mouvement, i.e. les sept couples (Jₖ, tₖ) qui définissent la consigne du jerk (cf. figure 1, 11) et la longueur totale L du mouvement. Ces calculs sont une optimisation sous contrainte des paramètres prédéfinis de la méthode : la vitesse maximale Vₘₐₓ, l'accélération maximale Aₘₐₓ et le jerk maximal Jₘₐₓ. Les données cinématiques, ainsi que les données initiales de la méthode (les positions initiale Xo et finale X_{f}) sont ensuite transmises (cf. figure 5, étape B) au circuit logique programmable (FPGA) 22.

Le FPGA 22 se compose ici d'une unique unité de calcul 25. Cette unité de calcul comprend une unité de logique combinatoire 221, d'un générateur d'impulsion 222, d'un latch 225, d'une horloge 226 et d'une unité de synchronisation des axes 227.

La commande du mouvement, en d'autres mots la séquence d'impulsions électriques envoyées au moteur pas à pas 24, est ici le fruit d'un processus itératif sur la position X(t) au cours du temps.

A chaque itération, l'unité de logique combinatoire 221 va déterminer (cf. figure 5, étape C) la position Xi+i sur base de la position courante Xi et des données cinématiques du mouvement. Ceci est réalisé en résolvant les équations de bases de la cinématique. Plus particulièrement, ces équations sont résolues sans aucune opération de multiplication et/ou de division arithmétique mais uniquement à l'aide de portes logiques élémentaires. Les deux seules opérations impliquées sont le décalage binaire droit et gauche et des additions binaires. Il prend donc en entrée la valeur de la position courante Xi et calcule en sortie, sur base des données cinématiques, la position suivante Xᵢ₊₁. Dans le cas de la première itération, la valeur d'entrée est la position initial X₀.

Une fois que la position Xᵢ₊₁ est déterminée, celle-ci est envoyée au latch 225 qui va agir comme une mémoire temporaire, conservant en mémoire la position Xi+i pour l'itération suivante. La valeur de la position Xᵢ₊₁ deviendra la valeur courante de la position à la fin de l'itération. Dans la présente invention, il agit donc comme une mémoire de la position calculée entre deux itérations.

La cadence de l'activation du latch 225, et de manière générale, la cadence itérative est déterminée par l'horloge 226 du FPGA qui fonctionne à sur une période de temps équivalente à l'inverse de la fréquence du FPGA.

La position Xi+i est également transmise au générateur d'impulsion 222. Celui-ci comprend une entité de seuillage 223 et d'un générateur d'impulsion à proprement parler 224. L'entité de seuillage effectue un test de condition logique de type booléenne sur la position Xi+i calculée. Cette condition consiste à déterminer si la position Xᵢ₊₁ fraîchement calculée est supérieure ou égale à un multiple entier (N) d'incréments linéaires dX. L'entier N est ici un compteur associé au nombre d'impulsions envoyées. Si la condition est respectée, l'entité de seuillage s'active et transmet au générateur d'impulsion 224 l'ordre d'envoyer une impulsion électrique de largeur pré-paramétrée au driver 23. De plus le compteur N s'incrémente d'une unité. Lorsque la condition logique n'est pas respectée, i.e. lorsque le seuil de l'entité 224 n'est pas dépassé, aucune impulsion électrique n'est envoyée et le processus itératif se poursuit.

Ensuite, le driver 23 actionne le mouvement du moteur 24. En effet, le driver transforme l'impulsion électrique en des signaux électriques de puissance qui seront appliqués aux bobines du moteur 24, pour effectuer l'incrément linéaire dX.

Le moteur 24 s'actionne (cf. figure 5, étape D) et le préhenseur mécanique auquel il est associé se déplace d'une longueur dX le long de la crémaillère. De manière équivalente, le moteur peut être fixe et c'est la crémaillère qui se déplace relativement à celui-ci.

Le processus se poursuit alors jusqu'à la fin du mouvement à effectuer (cf. figure 5, étape E), i.e. lorsque Xᵢ = X_{f}.

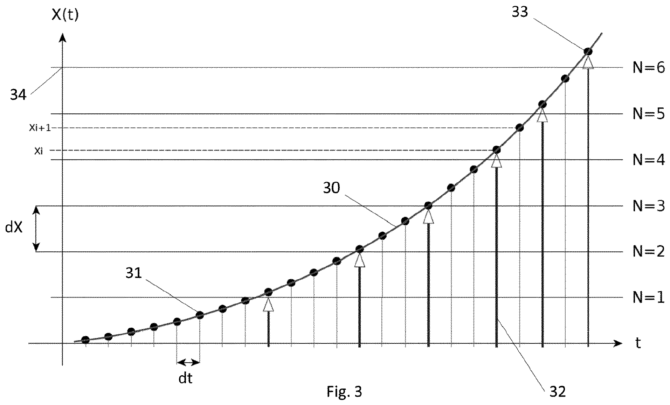

En référence à la figure 3, la détection de seuil sur la position du mouvement ainsi que l'envoi, le cas échéant, d'une impulsion électrique au moteur est représenté. Le graphique représente la position X(t) en fonction du temps. La courbe 30 est la consigne théorique continue de la position du mouvement à effectuer dans la direction X. Dans ce cas-ci, la consigne est une fonction quadratique et le mouvement correspond donc à un mouvement uniformément accéléré. Les points noirs 31 correspondent aux positions Xᵢ₊₁ successivement calculées lors du processus itératif à chaque cycle d'horloge dt. Les flèches 32 indiquent les moments auxquels une impulsion a été envoyée au moteur. En d'autres mots, chaque flèche indique une itération pour laquelle la condition logique de l'unité de seuillage a été respectée.

Par exemple, à la fin de la vingt et unième itération 33, six impulsions ont été envoyées au moteur, ce qui correspond à un mouvement total correspondant à six incrément linéaire dX, le moteur se trouve donc à la position 34.

De manière conventionnelle, i.e. si le moteur 23 avait été commandé par un FPGA effectuant des opérations de multiplications et/ou divisions arithmétiques, le cycle d'horloge de l'horloge 226 aurait dû être considérablement allongé ou les calculs étalés sur plusieurs cycles d'horloge menant à une résolution temporelle très basse. Ce qui implique que les flèches 32 correspondant aux impulsions données au moteur auraient été beaucoup plus espacées au cours du temps. En d'autres mots, le mouvement résultant aurait été une séquence saccadée de déplacement dX élémentaires.

Avec la méthode de l'invention, le déplacement du préhenseur mécanique est donc lisse, le caractère saccadé du mouvement est limité et le déplacement est effectué à haute vitesse grâce à la haute résolution temporelle de la méthode (obtenue grâce à une résolution des équations de la cinématique par portes logiques uniquement).

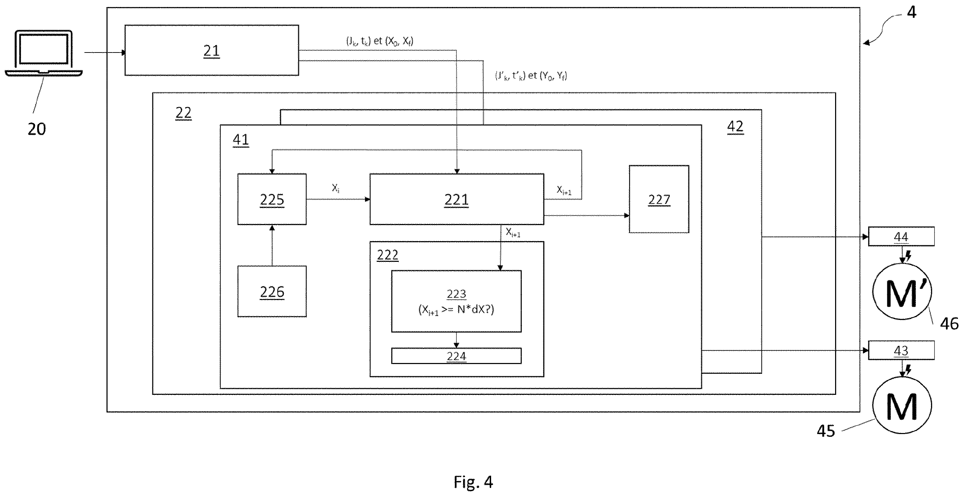

La méthode de l'invention peut également permettre la commande de mouvement dans plusieurs dimensions de l'espace. En référence à la figure 4, un mode de mise en œuvre de l'invention pour la commande d'un mouvement en ligne droite dans deux directions (X et Y) de l'espace grâce à un unité de contrôle 4 est présenté.

Dans ce cas spécifique, le mouvement est « divisé » en deux sous-mouvements spécifiques associés aux axes X et Y. Chaque sous-mouvement se caractérise alors par des positions initiales et finales qui leurs sont propres (le couple (X₀, X_{f}) selon X et le couple (Y₀, Y_{f}) selon l'axe Y). Un moteur pas à pas et un driver sont associés à chaque direction du mouvement X et Y, respectivement le moteur 45 et son driver 43 pour l'axe X et le moteur 46 et son driver 44 pour l'axe Y.

Le processeur 21 calcule alors les données cinématiques propres à chaque direction du mouvement et les envoie, avec les positions initiales et finales, aux unités identiques de calcul 41 et 42. Par soucis de clarté, les composants de l'élément 42 ne sont pas représentés sur la figure 4. Ces unités 41 et 42 vont de manière similaire à la méthode présentée à la figure 2, calculer les positions successives Xi et Yi du mouvement au cours du temps.

Les moteurs sont ensuite actionnés de manière coordonnée et dans le respect de la condition logique de seuillage, comme précédemment. L'invention n'est pas limitée à deux moteurs et peut être généralisée au commandement de plusieurs moteurs pas à pas, dans les limites de la capacité du FPGA utilisé pour mettre en œuvre la méthode.

Dans les exemples précédents, le motion blending n'est pas implémenté, c'est pourquoi l'unité de synchronisation des axes n'est pas utilisée. Néanmoins, il est tout à fait possible de généraliser les exemples précédemment à des mouvements incluant le motion blending. Dans ce-cas, l'unité de synchronisation des axes sera utilisée pour assurer une bonne fluidité du mouvement.

En référence à la figure 5, la méthode de l'invention comprend 5 étapes différentes. Ces étapes correspondent aux étapes de la première revendication et sont mentionnées dans la présente description.

## Revendications

1. Méthode de contrôle d'au moins un moteur pas à pas de commande d'un mouvement à l'aide d'un processeur et d'un circuit logique programmable (FPGA) fonctionnant à une fréquence donnée déterminant un cycle d'horloge, comprenant les étapes suivantes :
A. On calcule avec le processeur les données cinématiques du mouvement à effectuer sur base des paramètres prédéfinis et des données initiales du mouvement à effectuer, les paramètres prédéfinis du mouvement à effectuer comprenant une vitesse maximale, une accélération maximale et une hyper-accélération maximale du mouvement et les données initiales du mouvement à effectuer comprenant une position initiale et une position finale de l'objet en mouvement ;
B. On transmet au FPGA les données cinématiques et les données initiales du mouvement à effectuer;
C. Le FPGA résout les équations de la cinématique à l'aide des données cinématiques à chaque cycle d'horloge et commande, pour chaque cycle d'horloge, l'envoi éventuel d'une impulsion au moteur;
D. Le cas échéant, le moteur s'actionne pour commander la fraction dudit mouvement correspondant à cette impulsion, et
E. On réitère les étapes C et D jusqu'à la fin du mouvement.

2. Méthode de contrôle selon la revendications 1 , dans laquelle les données cinématiques transmises au FPGA comprennent un profil d'hyper-accélération et permettant au FPGA d'en déduire à chaque cycle d'horloge une accélération, une vitesse et/ou des positions successives du mouvement à effectuer sur base de ces mêmes données calculées au cycle d'horloge précédent.

3. Méthode de contrôle selon l'une des revendications 1 à 2, dans laquelle la résolution des équations de la cinématique de l'étape C est réalisée à l'aide de portes logiques élémentaires uniquement.

4. Méthode selon l'une des revendications précédentes, dans laquelle les données initiales du mouvement à effectuer comprennent une vitesse initiale et une vitesse finale du mouvement, qui peuvent être indépendamment nulle ou non-nulle.

5. Méthode selon l'une des revendications précédentes, pour contrôler au moins deux moteurs pas-à-pas impartissant chacun un mouvement dans une direction différente, selon laquelle une unité de synchronisation est utilisée pour mettre en œuvre un « motion blending ».

6. Dispositif pour la mise en œuvre de la méthode selon la revendication 1 comprenant :
- Un processeur agencé pour calculer des données cinématiques ;
- Un circuit logique programmable (FPGA) fonctionnant à une fréquence donnée déterminant un cycle d'horloge, connecté au processeur, agencé pour résoudre les équations cinématiques, et émettre éventuellement un ordre d'impulsion de mouvement, et
- Au moins un moteur pas-à-pas, connecté au FPGA, agencé pour s'actionner en cas de réception de l'ordre d'impulsion émis par le FPGA.

7. Dispositif selon la revendication 6 dans lequel le FPGA comprend au moins une unité de calcul, un latch et un générateur d'impulsion.

8. Dispositif selon l'une des revendications 6 et 7, comprenant au moins deux moteurs pas-à-pas et dans lequel le FGPA comprend une unité de synchronisation.

9. Dispositif selon les revendications 6 à 8, comprenant un générateur d'impulsions agencé entre le FPGA et le moteur pas-à-pas et comprenant une entité de seuillage.
